# EUROPEAN PATENT APPLICATION

(11) **EP 2 803 993 A1**
(43) Date of publication of application: **19.11.2014**
(21) Application number: 12864968.8
(22) Date of filing: 08.08.2012
(51) Int. Cl.: G01N 30/24

(54) **AUTO-SAMPLER**

(30) Priority: 13.01.2012 JP 2012004784
(71) Applicant: Shimadzu Corporation, Kyoto-shi, Kyoto 604-8511 (JP)
(72) Inventor: FUJITA, Takaaki, Kyoto-shi, Kyoto 604-8511 (JP); INOUE, Takashi, Kyoto-shi, Kyoto 604-8511 (JP)
(74) Representative: Webster, Jeremy Mark
(86) International application number: PCT/JP2012/070148
(87) International publication number: WO 2013/105296

(57) **Abstract**

The present invention is an auto-sampler 1 having a casing 10 whose inner space can be hermetically closed, including an opening 30 provided in a wall of the casing 10 and a gas discharger 32 for discharging gas inside the casing 10 through the opening 30 to the outside of the casing 10.

## Description

### TECHNICAL FIELD

The present invention relates to an auto-sampler, and more specifically, to an auto-sampler suitable for use in a 1 quid chromatograph system.

### BACKGROUND ART

In an auto-sampler used in a liquid chromatograph system, a liquid sample contained in a sample container is drawn into and held by a sampling needle. Then, the sampling needle is transferred by a moving means to an injection port provided at a predetermined position, where the liquid sample is injected into the port.

The auto-sampler has a casing which contains various components, such as a rack for placing a plurality of sample containers placed at predetermined positions, the moving means for transferring the sampling needle in the aforementioned manner, the sample injection port, a washing tank for cleaning the sampling needle with a washing liquid, and a waste-liquid passage for discharging waste liquid after the cleaning of the sampling needle. In some cases, a container for holding a mobile phase to be supplied to a column of the liquid chromatograph is also provided.

In the auto-sampler, the sample containers and/or the air in the casing is heated or cooled to maintain the liquid samples at a constant temperature or to perform the heating or cooling of the samples according to the purpose of the analysis. When the sample containers and/or the air in the casing is cooled, the water-vapor pressure in the casing may exceed the saturated water-vapor pressure, causing water condensation on the sample containers or other objects. The condensed water can cause a problem; for example, it may be mixed in the liquid sample during the sample-drawing process and decrease the sample concentration. Therefore, in the conventional auto-samplers, the casing is hermetically sealed to prevent the penetration of water vapors from outside (for example, see Patent Literature 1), and simultaneously, the water vapors in the casing are collected by some means, such as a Peltier element for locally condensing water vapors or a desiccating agent.

### CITATION LIST

### PATENT LITERATURE

Patent Literature 1: JP 7-120448 A

### SUMMARY OF INVENTION

### THECHNICAL PROBLEM

As the washing liquid or the mobile phase, organic solvents are frequently used, and accordingly, the waste liquid often contains organic solvents. Those solvents turn into vapors within the casing of the auto-sampler, and the vaporized waste liquid flows through the waste-liquid passage into the casing. Such vapors cannot be easily collected by a desiccating agent. The local cooling by the Peltier element is also ineffective in collecting the vapors of a solvent whose saturated vapor pressure at low temperatures is high. Allowing the solvent vapors to fill the sealed casing leads to a corrosion of the inner walls of the casing, the motor, the gears and other devices, as well as the rack.

The problem to be solved by the present invention is to provide an auto-sampler capable of preventing solvent vapors from filling the casing of the auto-sampler and causing a corrosion of the devices, walls and other objects inside the casing.

### SOLUTION TO PROBLEM

The auto-sampler according to the present invention aimed at solving the previously described problem is an auto-sampler having a casing whose inner space can be hermetically closed, including:
an opening provided in a wall of the casing; and
a gas discharger for discharging gas inside the casing through the opening to the outside of the casing.

By the auto-sampler according to the present invention, the gas which contains solvent vapors or water vapors emitted from the liquid sample or the washing liquid inside the casing can be discharged through the opening provided in a wall of the casing to the outside of the casing. Thus, the solvent vapors or the water vapors are prevented from filling the casing and causing a corrosion of the devices, walls and other objects inside the casing.

The auto-sampler according to the present invention may preferably include a concentration detector for detecting the concentration of solvent vapors in the casing and for generating a predetermined signal when the concentration has exceeded a predetermined threshold, and a first controller for activating the gas discharger upon receiving the aforementioned signal.

This system can assuredly activate the gas discharger without requiring additional manipulations by users. Furthermore, the casing is assuredly prevented from being filled with solvent vapors at a concentration equal to or higher than the predetermined level.

Alternatively, the auto-sampler may be provided with a second controller for automatically activating the gas discharger at predetermined intervals of time.

This system can also activate the gas discharger without requiring additional manipulations by users, and furthermore, the casing is prevented from being filled with solvent vapors.

The auto-sampler according to the present invention may preferably include an open/close device provided on an outer side of the opening, the open/close device being designed to maintain the opening in an open state when the gas discharger is running and to close the opening when the gas discharger is not running.

For example, the open/close device may be a cover with the upper end joined to an upper portion of the opening. When the gas discharger is running, the cover is opened by the wind pressure of the gas flowing from the inside to the outside of the casing, letting the gas be discharged. When the gas discharger is not running, the cover is in its original position due to its own weight and closes the opening, thus preventing an inflow of water vapors from the outside.

The auto-sampler according to the present invention may preferably have a water-vapor collector inside the casing.

By this system, the situation where the casing is filled with water vapors is also prevented. Examples of the water-vapor collector include a Peltier element for locally condensing water vapors and a desiccating agent.

### ADVANTAGEOUS EFFECTS OF THE INVENTION

The auto-sampler according to the present invention can discharge solvent vapors from the inside to the outside of the casing by an operation of the gas discharger and thereby prevents the situation where the solvent vapors fill the casing and cause a corrosion of the devices, walls and other objects inside the casing.

### BRIEF DESCRIPTION OF DRAWINGS

Fig. 1 is a diagram illustrating the structure of one embodiment of the auto-sampler according to the present invention.
Fig. 2 is a diagram illustrating the inner structure of an upper block of the auto-sampler of the present embodiment.
Fig. 3 is a diagram illustrating the right-side inner wall of the upper block of the auto-sampler of the present embodiment.
Fig. 4 is a diagram illustrating a system for an operation control of a fan in the auto-sampler of the present embodiment.
Fig. 5 is a diagram illustrating a variation of the auto-sampler.

### DESCRIPTION OF EMBODMENTS

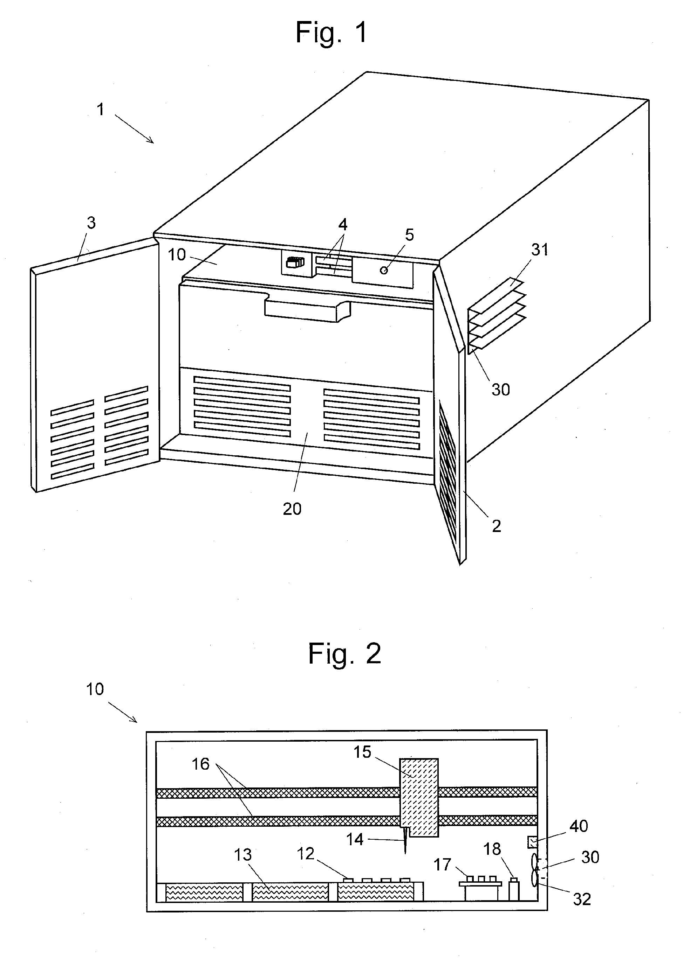

Fig. 1 is a perspective view of an auto-sampler 1 of the present embodiment, with the outer right door 2 and the outer left door 3 opened to show the inside.

An optical door sensor 4 for sensing that the outer doors are open is provided in the upper portion of the auto-sampler 1. An LED lamp 5 for producing a blinking signal to inform users of an abnormality (e.g. a malfunction in the temperature control) is attached to an upper block 10 (which will be described later). An opening 30 for allowing communication between the outside of the auto-sampler 1 and the inside of the upper block 10 is provided on the right side of the auto-sampler 1. A shutter 31 consisting of a plurality of plates each of which has its upper end fixed is provided on the outside of the opening 30.

The auto-sampler 1 contains the upper block 10 and a lower block 20.

Fig. 2 shows the main components contained in the upper block 10. This upper block 10 corresponds to the casing of the present invention.

The main components contained in the upper block 10 are as follows: a rack 13 for placing a plurality of sample containers 12 at predetermined positions; a sampling needle 14 for drawing and holding a liquid sample from one of the sample containers 12, and for injecting the liquid sample into a predetermined injection port 17; a drive mechanism 15 for operating the sampling needle 14 in the aforementioned manner; rails 16 for horizontally moving the drive mechanism 15; the injection port 17 for injecting a liquid sample through a passage (not shown) into a column of a liquid chromatograph system; a washing tank 18 for cleaning the sampling needle 14 with a washing liquid, and a waste-liquid passage (not shown) for discharging waste liquid after the cleaning of the sampling needle 14.

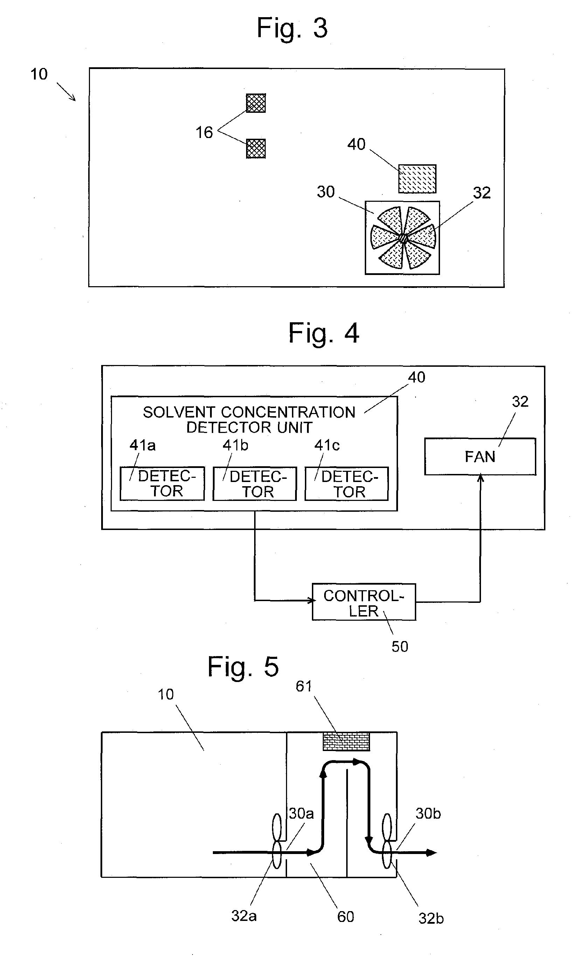

Fig. 3 shows the right-side inner wall of the upper block 10. The right side on Fig. 3 corresponds to the front side of the auto-sampler 1. The position of the opening 30 on the right-side wall of the upper block 10 corresponds to that of the opening 30 shown in Fig. 1. A fan 32 for discharging the gas inside the upper block 10 through the opening 30 to the outside of the auto-sampler 1 is provided. A solvent vapor concentration detector unit 40 for detecting solvent concentrations in the upper block 10 is provided above the fan 32. This unit is connected to an external controller 50 (not shown).

The lower block 20 contains a temperature controller for maintaining the air and the liquid samples inside the upper block 10 at a predetermined temperature, a power source for supplying power to the temperature controller and other units, as well as other devices.

The gas-discharging operation in the present embodiment is hereinafter described by means of Fig. 4.

As already explained, in the auto-sampler 1, the air and the sample containers 12 inside the upper block 10 are heated or cooled to maintain the auto-sampler at a constant temperature or to perform the heating or cooling of the auto-sampler. During the process, the solvents contained in the washing liquid, the waste liquid or the like vaporize and spread within the upper block 10. Taking into account the kinds of solvents to be detected, the solvent vapor concentration detector unit 40 in the present embodiment has three detectors 41a, 41b and 41c. Each detector continuously detects the concentration of the corresponding kind of solvent vapors and sends a predetermined signal to the controller 50 when the concentration has exceeded a predetermined level.

Upon receiving the predetermined signal from any of the detectors, the controller 50 energizes the fan 32 for a predetermined period of time. The energized fan 32 produces a gas flow from the inside of the upper block 10 to the outside of the auto-sampler 1, which pushes the shutter 31 upward by wind pressure. Thus, the gas inside the upper block 10 is discharged through the opening 30 to the outside of the auto-sampler 1. Later on, when the fan 32 is deenergized, the shutter 31 lowers due to its own weight and closes the opening 30.

The previously described embodiment is a mere example and can be appropriately changed or modified in line with the spirit of the present invention.

The auto-sampler 1 of the present embodiment can discharge both solvent vapors and water vapors from the upper block 10 to the outside of the auto-sampler 1. However, it is preferable to provide a water-vapor collector in the upper block 10 in order to more effectively remove water vapors. By this system, the situation where the upper block 10 is filled with water vapors is also prevented. For example, the water-vapor collector may be a Peltier element for locally condensing water vapors or a desiccating agent.

The solvent concentration detector unit 40 may be configured so that the detection signal of each kind of solvent vapors is directly sent from the sensors to the controller 50. In this case, the controller 50 can be configured so as to energize the fan 32 when any one of the solvent-vapor concentrations derived from the detection signals received from the sensors has exceeded a reference concentration a which has been previously set in the controller 50 for each kind of solvent. It is also possible to set another reference concentration b in the controller 50 other than the reference concentration a and to configure the controller 50 so as to deenergize the fan 32 when the concentration of the solvent vapors has become lower than the reference concentration b as a result of the operation of discharging the solvent vapors from the upper block 10 by the fan 32.

It is also possible to configure the controller 50 so as to automatically energize the fan 32 at predetermined intervals of time, in which case the solvent concentration detector unit 40 can be omitted.

In the previous embodiment, the gas inside the upper block 10 is directly discharged through the single opening 30 to the outside of the auto-sampler 1. Fig. 5 shows another possible structure, in which a middle chamber 60 having an opening 30a for communication with the inside of the upper block 10 and an opening 30b for communication with the outside of the auto-sampler 1 is provided. This chamber is provided with a fan 32a for discharging the gas inside the upper block 10 through the opening 30a into the middle chamber 60 and a fan 32b for discharging the gas inside middle chamber 60 through the opening 30b to the outside of the auto-sampler 1. A water-vapor collector 61 provided in the middle chamber 60 efficiently traps water vapors coming from the outside of the auto-sampler 1.

### REFERENCE SIGNS LIST

- 1: Auto-Sampler
- 2: Outer Right Door
- 3: Outer Left Door
- 4: Optical Door Sensor
- 5: LED Lamp
- 10: Upper Block
- 12: Sample Container
- 13: Rack
- 14: Sampling Needle
- 15: Drive Mechanism
- 16: Rails
- 17: Injection Port
- 18: Washing Tank
- 19: Lower Block
- 30, 30a, 30b: Opening
- 31: Shutter
- 32, 32a, 32b: Fan
- 40: Solvent Concentration Detector Unit
- 41a, 41b, 41c: Detector
- 50: Controller
- 60: Middle Chamber
- 61: Water-Vapor Collector

## Claims

1. An auto-sampler having a casing whose inner space can be hermetically closed, comprising:
an opening provided in a wall of the casing; and
a gas discharger for discharging gas inside the casing through the opening to the outside of the casing.

2. The auto-sampler according to claim 1, comprising:
a concentration detector for detecting a concentration of solvent vapors in the casing and for generating a predetermined signal when the concentration has exceeded a predetermined threshold; and
a first controller for activating the gas discharger upon receiving the aforementioned signal.

3. The auto-sampler according to claim 1 or 2, comprising a second controller for automatically activating the gas discharger at predetermined intervals of time.

4. The auto-sampler according to one of claims 1-3, comprising an open/close device provided on an outer side of the opening, the open/close device being designed to maintain the opening in an open state when the gas discharger is running and to close the opening when the gas discharger is not running.

5. The auto-sampler according to claim 4, wherein the open/close device is a cover with an upper end joined to an upper portion of the opening.

6. The auto-sampler according to one of claims 1-5, comprising a water-vapor collector inside the casing.
